# NEW EUROPEAN PATENT SPECIFICATION

(11) **EP 2 339 670 B2**
(45) Date of publication and mention of the opposition decision: **23.10.2019**
(45) Mention of the grant of the patent: 14.11.2012
(21) Application number: 10175576.7
(22) Date of filing: 07.09.2010
(51) Int. Cl.: H01M 2/20, H01M 2/30

(54) **Battery module comprising a connecting member composed of first and second connecting bars**
Batteriemodul
Module de batterie

(30) Priority: 05.10.2009 US 248806 P; 30.08.2010 US 871812
(43) Date of publication of application: 29.06.2011
(73) Proprietor: SB LiMotive Co., Ltd., Yongin-si Gyeonggi-do (KR)
(72) Inventor: Kim, Sung-Bae, Gyeonggi-do (KR); Kim, Yong-Sam, Gyeonggi-do (KR); Byun, Sang-Won, Gyeonggi-do (KR); Kim, Hyo-Seob, Gyeonggi-do (KR)
(74) Representative: Gulde & Partner

(56) References cited:
- EP-A2- 1 160 893
- WO-A1-93/10935
- WO-A1-2008/144994
- WO-A1-2010/142679
- DE-U1-202009 012 647
- GB-A- 2 330 251
- JP-A- 2002 358 945
- JP-B2- 4 326 214
- US-A1- 2002 046 864
- US-A1- 2006 088 761
- US-A1- 2006 127 754
- US-A1- 2006 255 764
- US-A1- 2009 123 830
- US-A1- 2009 223 940
- & Certified translation into English of D5
- English Wikipedia page "Friction stir welding" edited on 24.07.2009
- Confirmation receipt of filing of the provisional application US/871,812
- Decision T0062/05 of the Technical Boards of Appeal at the European Patent Office
- Declaration and Power of Attorney as well as an assignment for Patent Application, Docket No. 64480/P849
- Annual salary contract between SBLiMotive and Mr. Sung-Bae Kim & English translation of parts of PD16
- Annual Salary contract between SBLiMotive and Mr. Yong-Sam Kim & English translation of parts PD17
- Annual salary contract between SBLiMotive and Mr. Sang-Won Byun & English translation of parts of PD18
- Annual salary contract between SBLiMotive and Mr. Hyo-Seob Kim & English translation of parts of PD19
- Letter of Declaration of Mr. Yung Kwang Lee, Legal Counsel, Samsung SDI Co. Ltd., dated Dec. 10, 2014
- Excerpt of the company regulations of SB LiMotive Co., Ltd. including a partial translation of the excerpt into English
- Letter of Declaration of Mr.Taeweon HEO, Senior Manager, legal & IP Team, Samsung SDI Co., Ltd., dated Oct. 9, 2015
- Patent System record: inventors information (in Korean) and invention history (in Korean with partial translation into English)
- Affidavit of Mr. Taeweon Heo, Senior Manager, legal & IP Team, Samsung SDI Co., Ltd., regarding documents PD16 - 19
- Affidavit of Mr. Taeweon Heo, Senior Manager, legal & IP Team, Samsung SDI Co., Ltd., regarding document PD21

## Description

### Field of the Invention

The present invention relates to a battery module. More particularly, the present invention relates to a battery module of which the structure for electrically connecting rechargeable batteries is improved.

### Description of the Related Art

Rechargeable batteries can be charged and discharged, unlike primary batteries that cannot be charged. Small capacity rechargeable batteries are used for small portable electronic devices such as mobile phones, laptop computers, and camcorders, while large capacity batteries are widely used as power sources for driving motors of hybrid vehicles, etc.

Recently, high power battery modules using a high energy density non-aqueous electrolyte have been developed, and the high power battery modules are formed as large-capacity battery modules by connecting a plurality of rechargeable batteries in series to be used for driving the motors of electric vehicles, etc.

Further, one large capacity rechargeable battery is generally composed of a plurality of rechargeable batteries connected in series, in which the rechargeable battery may be formed in a cylindrical shape or a prismatic shape.

Prismatic rechargeable batteries include a case having an electrode assembly in which an positive electrode and a negative electrode are disposed with a separator there between, and a space where the electrode assembly is disposed, a cap plate sealing the case and having a terminal hole where an electrode terminal is inserted, and an electrode terminal that is electrically connected with the electrode assembly and protrudes outside the case through the terminal hole.

The electrode terminal is fixed to the cap plate by a nut, but there is a problem in that the nut is loosened by continuous external vibration or shock. This problem causes contact resistance inside the rechargeable batteries, such that the output and cycle-life of the rechargeable batteries are reduced.

In particular, when an positive electrode terminal is made of aluminium and a negative electrode terminal is made of copper, as the connecting member and the positive electrode terminal or the negative electrode terminal are made of different materials, there is a problem in that corrosion is generated or contact resistance is continuously increased by contact between different metals.

State of the art secondary batteries are provided in GB 2 330 251 A, US 2006/127754 A1, WO 2008/144994 A1.

A method of connecting a connecting member to the positive electrode and the negative electrode using resistance welding has been proposed to overcome the problem.

However, when the connecting member is made of a different material from that of the positive electrode terminal or the negative electrode terminal, there is a problem in that it is difficult to bond the connecting member and the terminals using resistance welding or ultrasonic welding because of different melting points. The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a battery module having advantages of easily and stably connecting a connecting member with terminals.

Accordingly, a battery module is provided comprising a plurality of rechargeable batteries formed in a prismatic shape each having a case and a cap plate connected to an opening of the case, and a connecting member to electrically connect a first positive electrode terminal of a first rechargeable battery with a second negative electrode terminal of a second rechargeable battery. The first electrode terminal is made of aluminum and the second electrode terminal is made of copper and first and second electrode terminals protrude outside the case. The connecting member has the form of a plate covering the first electrode terminal and the second electrode terminal and comprises a first connecting bar connected to the first electrode terminal of the first rechargeable battery, a second connecting bar connected to the second electrode terminal of the second rechargeable battery, wherein the second connecting bar comprises a different material than the first connecting bar, and comprises a welding portion connecting the first connecting bar with the second connecting bar. The first connecting bar comprises the same material as the first electrode terminal, and the second connecting bar comprises the same material as the second electrode terminal. The first connecting bar has a stepped profile and comprises a first welding portion formed to contact the second connecting bar by friction stir welding, and a body portion.

The upper surface of the first connecting bar is stepped and the first welding portion has a smaller thickness than the body portion, the lower surfaces of the body portion and the welding portion being aligned with each other, and wherein the second connecting bar has a stepped profile and comprises a body portion and a second welding portion formed to contact the first welding portion, the second connecting bar being arranged such that the upper and lower surfaces of the first and second connecting bar are aligned with each other.

The welding portion preferably comprises a nugget zone comprising a mixture of the materials of the first and second connecting bars. The nugget zone is preferably formed within the first and second connecting bar. The welding portion is preferably formed by friction stir welding.

When the first connecting bar and the second connecting bar are bonded by friction stir welding solid-state bonding is achieved such that the connecting member and the terminals, which may have different melting points, can be stably bonded. In particular, the nugget zone formed at the centre of the welding portion 150 is an area where dynamic recrystallization is generated, such that its structure resists external vibration and shock. Since dynamic recombination is generated, it is possible to prevent solidification cracks that may be formed in fuse bonding, and there is little deformation, such that mechanical properties are excellent.

It is thereby possible to prevent contact resistance from increasing and corrosion from occurring between the connecting member the terminals. Accordingly, not only the output of the battery module is improved, but bonding cycle-life of the connecting member and the terminals is improved, such that the overall cycle-life of the battery module is improved.

The first electrode terminal and the first connecting bar may be made of aluminium and the second electrode terminal and the second connecting bar may be made of copper.

By bonding the first connecting bar and the second connecting bar by friction stir welding, it is possible to easily bond the first connecting bar made of aluminium and the second connecting bar made of copper. Copper and aluminium have different melting points, such that when they are bonded by resistance welding or ultrasonic welding there is high possibility that defects occur at the welding portion, or the welding portion may be separated by external shock or vibration.

The first and second connecting bars may each comprise a terminal welding portion at which the first or second connecting bar is welded to the first or second electrode terminal, respectively.

The first connecting bar has a stepped profile and comprises a first welding portion formed to contact the second connecting bar, and a body portion.

Advantageously, it is thereby possible to easily overlap the first and second connecting bars.

The welding portion may comprise a welding groove formed in the surface of the connecting member. Additionally or alternatively, the welding portion may have a cone or truncated cone like shape.

The welding portion may further comprise at least one of a thermo-mechanically affected zone around the nugget zone, in which deformation of the material of the first and second connecting bar is distributed at an angle with respect to the surface of the connecting bar; and a heat affected zone around the thermo-mechanically affected zone.

According to the present invention, with a decrease of contact resistance and corrosion, the output of the battery module is improved, and the cycle-life of the battery module is also improved.

### BRIEF DESCRIPTION OF THE DRAWINGS

FIG. 1 is a perspective view showing a battery module according to the first exemplary embodiment of the present invention;
FIG. 2 is a perspective view of a connecting member according to the first exemplary embodiment of the present invention;
FIG. 3 is a partial cross-sectional view of the connecting member according to the first exemplary embodiment of the present invention;
FIG. 4 is a perspective view showing a connecting member not according to the present invention;
FIG. 5 is a perspective view showing a connecting member not according to the present invention; and
FIG. 6 is a perspective view showing a battery module according to the second exemplary embodiment of the present invention.

### DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. Like reference numerals designate like elements throughout the specification.

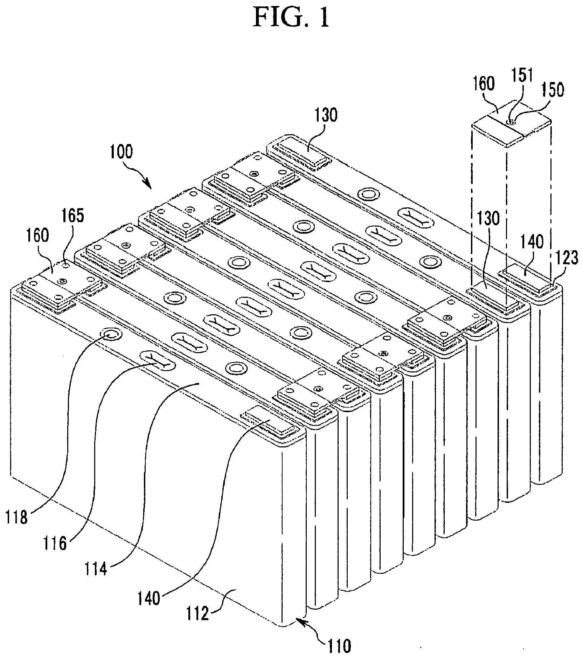

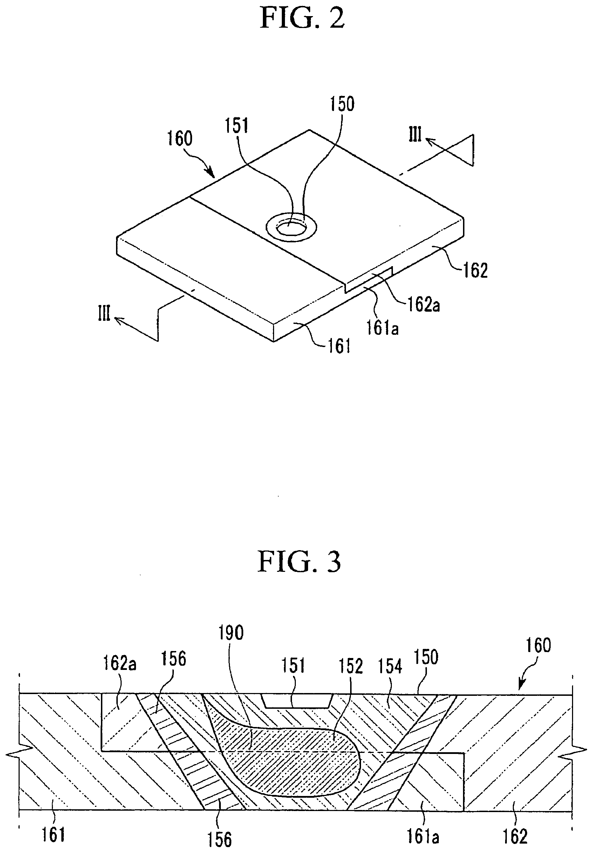

FIG. 1 is a perspective view showing a battery module according to the first exemplary embodiment of the present invention, and FIG. 2 is a perspective view showing a connecting member according to the first exemplary embodiment of the present invention.

Referring to FIG. 1 and FIG. 2, a battery module 100 according to the present exemplary embodiment includes a plurality of rechargeable batteries each 110 having a positive electrode terminal 130 and a negative electrode terminal 140, and connecting members 160 that electrically connect the rechargeable batteries 110.

The battery module 100 according to the present exemplary embodiment is formed by connecting the rechargeable batteries 110 in series. However, the present invention is not limited thereto, and the rechargeable batteries 110 may be connected in parallel.

The rechargeable battery 110 according to the present exemplary embodiment is formed in a prismatic shape and includes a case 112, a cap plate 114 connected to an opening of the case 112, and the positive electrode terminal 130 and the negative electrode terminal 140 that protrude outside the case 112. Although the prismatic rechargeable battery is exemplified in the present exemplary embodiment, the present invention is not limited thereto, and the battery may be formed in a cylindrical shape or other shapes.

A vent member 116 that is opened when the internal pressure increases and a sealing cap 118 that seals an electrolyte injection inlet are disposed on the cap plate 114.

The terminals 130 and 140 are fixed to the cap plate 114 while protruding outside the cap plate 114, and a gasket 123 for insulating and sealing is disposed between the cap plate 114 and the terminals 130 and 140, respectively. The positive electrode terminal 130 and the negative electrode terminal 140 are formed substantially in a plate shape and are electrically connected to an electrode assembly (not shown) inserted in the case 112. Further, the positive electrode terminal 130 is made of aluminium and the negative electrode terminal 140 is made of copper.

The rechargeable batteries 110 arranged in parallel with each other are connected in series by the connecting members 160, in which the positive electrode terminals 130 and the negative electrode terminals 140 of adjacent rechargeable batteries 110 are alternately disposed and the connecting member 160 is welded to the positive electrode terminal 130 of one rechargeable battery 110 and the negative electrode terminal of the adjacent rechargeable battery 110.

The connecting member 160 is formed in a plate shape and disposed on the positive electrode terminal 130 and the negative electrode terminal 140 to cover the positive electrode terminal 130 and the negative electrode terminal 140 and then welded, and a terminal welding portion 165 is formed at the connecting member 160.

The connecting member 160 includes a first connecting bar 161 and a second connecting bar 162 that is bonded to the first connecting bar 161 by friction stir welding. The first connecting bar 161 is made of aluminium, as is the positive electrode terminal 130, and the second connecting bar 162 is made of copper, as is the negative electrode terminal 140. The first connecting bar 161 is fixed to the positive electrode terminal 130 by welding and the second connecting bar 162 is fixed to the negative electrode terminal 140 by welding.

A first welding protrusion 161a is formed at a side of the first connecting bar 161. The first welding protrusion 161a extends from the lower side of the first connecting bar 161 to have a smaller thickness than that at other portions, and is stepped with respect to the upper surface. In other words, the first connecting bar 161 comprises two plateaus with different heights, the lower plateau being the first welding protrusion 161a.

A second welding protrusion 162a is formed at a side of the second connecting bar 162. The second welding protrusion 162a extends from the lower side of the second connecting bar 162 to have a smaller thickness than that at other portions, and is stepped with respect to the lower surface. In other words, the second connecting bar 162 also comprises two plateaus with different heights, the one with the lower height being the second welding protrusion 162a. Preferably, the second connecting bar 162 has the inverse structure of the first connecting bar 161 such that the length of the first welding protrusion 161a and the second welding protrusion 162a match. In addition, the sum of the thicknesses of the first welding protrusion 161a and the second welding protrusion 162a may have the same value as the thickness of the regions of the first and second welding protrusions 161, 162 where the respective first and second welding protrusions 161a, 162a are not formed. Preferably, the top and bottom surfaces of the first and second connecting bars 161, 162 are formed to have the same level after connection.

The second welding protrusion 162a is disposed over the first welding protrusion 161a, such that the second welding protrusion 162a overlaps the first welding protrusion 161a. In this position, the first welding protrusion 161a and the second welding protrusion 162a are bonded by friction stir welding.

FIG. 3 is a partial cross-sectional view of a connecting portion according to the first exemplary embodiment of the present invention.

Referring to FIG. 3, with the welding protrusions 161a and 162a overlapping, a welding portion 150 is formed by rotating a tool to recrystallize the structure using dynamic flow. The tool has a pin and a shank where the pin is fixed, and the cross-section where the pin protrudes from the shank is called a shoulder.

The first connecting bar 161 and the second connecting bar 162 are bonded by spot welding, in which the portion where the shoulder contacts the connecting member 160 is the welding portion 150, and a welding groove 151 is formed at the portion of the welding portion 150 where the pin has been inserted.

As shown in FIG. 3, a nugget zone 152 that is formed by dynamic recrystallization, a thermo-mechanically affected zone (TMAZ) 154, and a heat affected zone (HAZ) 156 are formed in the welding portion 150.

The nugget zone 152 is a portion where recovery and recrystallization occur due to high heat and the amount of deformation, such that the nugget zone 152 is also called a dynamic-recrystallized portion. Unlike general welding in which melting occurs by heat, the nugget zone 152 is formed by dynamic recrystallization of a material that is melded in a solid state by friction heat and stirring. In a nugget zone 152, molecules of two different materials mix with each other and the boundary line between the first and second connecting bars 161, 162 disappears in that area. If a virtual boundary line 190 between the lower surface of the second connecting bar 162 and the top surface of the first connecting bar 161 in the region of overlap would be drawn, the nugget zone 152 extends vertically across and horizontally along this virtual boundary line 190. The nugget zone 152 has preferably the shape of a nugget. The diameter of the nugget zone 152 is generally larger than the diameter of the pin and smaller than the diameter of the shoulder. The size of the nugget zone 152 is changed by the rotational speed of the tool, and when the rotational speed is too high, the size of the nugget zone 152 is reduced. Further, when the rotational speed is too high, the shape of the crystal is incomplete and defects may occur at the incomplete portion.

The thermo-mechanically affected zone 154 is a portion where partial recrystallization occurs by plastic deformation caused by friction at a contact surface where the shoulder of the tool contacts the connecting member 160, and where thermal deformation by friction and mechanical deformation by the shoulder simultaneously occur. Crystals softened by excessive plastic flow and deformation of the material are distributed at an angle in the thermo-mechanically affected zone 154. The thermo-mechanically affected zone 154 is provided around the nugget zone 152.

The heat affected zone 156 is more affected by heat than the thermo-mechanically affected zone 154, in which slanting crystals exist, i.e. crystals formed on the slant shown in Fig. 3, and a plurality of air holes are formed. That is, the heat affected zone 156 extends at an angle from the top surface of Fig. 3 to the bottom surface. The heat affected zone 156 delimits the thermo-mechanically affected zone 154 to the left and the right of the welding portion 150 in Fig. 3.

When the first connecting bar 161 contacting the positive electrode terminal 130 is made of the same material as the positive electrode terminal 130 and the second connecting bar 162 contacting the negative electrode terminal 140 is made of the same material as the negative electrode terminal 140, as in the present exemplary embodiment, it is possible to prevent contact resistance from increasing and corrosion from occurring between the connecting member 160 and the terminals 130 and 140. Accordingly, not only the output of the battery module 100 is improved, but bonding cycle-life of the connecting member 160 and the terminals 130 and 140 is improved, such that the overall cycle-life of the battery module 100 is improved.

Further, in the connecting member 160, the portion made of the same material as the positive electrode terminal 130 is welded to the positive electrode terminal 130 and the portion made of the same material as the negative electrode terminal 140 is welded to the negative electrode terminal 140, such that weldability between the connecting member 160 and terminals 130 and 140 is improved.

Further, by bonding the first connecting bar 161 and the second connecting bar 162 by friction stir welding, it is possible to easily bond the first connecting bar 161 made of aluminium and the second connecting bar 162 made of copper. Copper and aluminium have different melting points, such that when they are bonded by resistance welding or ultrasonic welding there is high possibility that defects occur at the welding portion 150, or the welding portion may be separated by external shock or vibration. In particular, when a battery module is used in electric vehicles or hybrid electric vehicles, vibration is continuously transmitted to the connecting member 160, such that the continuous vibration causes contact defects between the connecting member and the terminals.

However, when the first connecting bar 161 and the second connecting bar 162 are bonded by friction stir welding, as in the present exemplary embodiment, solid-state bonding is achieved such that the connecting member 160 and the terminals 130 and 140, which have different melting points, can be stably bonded. In particular, the nugget zone 152 formed at the centre of the welding portion 150 is an area where dynamic recrystallization is generated, such that it has a structure that resists external vibration and shock. Further, the thermo-mechanically affected zone 154, which is an area where two connecting bars 161 and 162 are rotated and bonded, has mixed parent metals, such it has a structural characteristic that resists external shock and vibration.

Further, the friction stir welding does not need a heat source, a welding rod, and a filler metal, unlike other welding, such that it is environment-friendly welding that does not discharge harmful light or substances. Further, since dynamic recombination is generated, it is possible to prevent solidification cracks that may be formed in fuse bonding, and there is little deformation, such that mechanical properties are excellent.

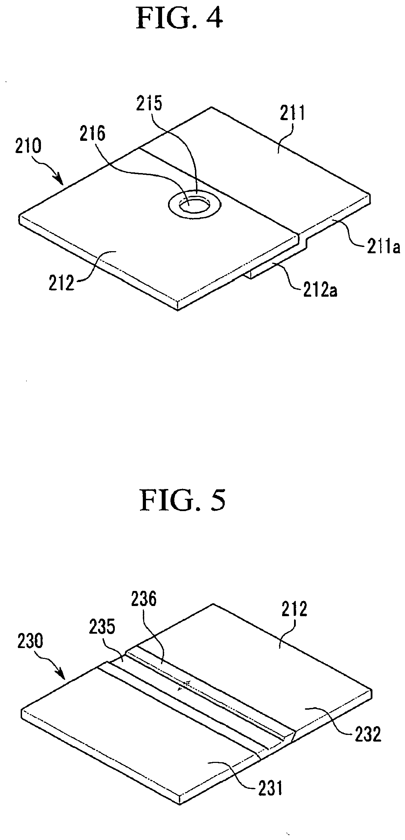

FIG. 4 is a perspective view showing a connecting member not according to the present invention.

Referring to FIG. 4, a connecting member 210 not according to the present invention which includes a first connecting bar 211 and a second connecting bar 212 attached to the first connecting bar 211 by welding. The first connecting bar 211 and the second connecting bar 212 are made of different materials, in which the first connecting bar 211 may be made of the same material as the negative electrode terminal 140 and the second connecting bar 212 may be made of the same material as the positive electrode terminal 130.

The second connecting bar 212 is formed substantially in a rectangular plate shape. The first connecting bar 211 has a body portion 211a disposed in parallel with the second connecting bar 212 and a bending or first welding portion 212a bending or being stepped from the body portion 211a and disposed under the second connecting bar 212.

The bending portion 212a is in close contact with the lower side of the second connecting bar 212 and overlaps the second connecting bar 212. A welding portion 215 is formed by bonding the second connecting bar 212 and the bending portion 212a by friction stir welding, using a tool. A welding groove 216 where the pin of the tool has been inserted is formed at the centre of the welding portion 215. Preferably, the top surfaces of the first and second connecting bars 211, 212 are formed to have the same level after connection.

It is possible to easily overlap the first connecting bar 211 and the second connecting bar 212 by bending the first connecting bar 211. Further, since the first connecting bar 211 and the second connecting bar 212 are bonded by friction stir welding, it is possible to not only easily and stably bond different metals, but to easily weld the connecting member 210 to the terminals 130 and 140.

FIG. 5 is a perspective view showing a connecting member not according to the present invention.

Referring to FIG. 5, a connecting member 230 includes a first connecting bar 231 and a second connecting bar 232 attached to the first connecting bar 231 by welding. The first connecting bar 231 and the second connecting bar 232 are made of different materials, in which the first connecting bar 231 may be made of the same material as the positive electrode terminal 130 and the second connecting bar 232 may be made of the same material as the negative electrode terminal 140.

The first connecting bar 231 and the second connecting bar 232 are formed substantially in a rectangular plate shape and disposed such that the side of the first connecting bar 231 and the side of the second connecting bar 232 contact each other.

In this position, a tool is disposed at the interface of the first connecting bar 231 and the second connecting bar 232, and the first connecting bar 231 and the second connecting bar 232 are fixed by welding. The tool performs welding while moving along the interface of the first connecting bar 231 and the second connecting bar 232, such that a welding portion 236 is formed in a line. A welding groove 235 where the pin has been inserted is formed at the centre of the welding portion 236.

Since seam welding is performed with the first connecting bar 231 and the second connecting bar 232 contacting each other, the welded area is wide such the first connecting bar 231 and the second connecting bar 232 can be more stably fixed.

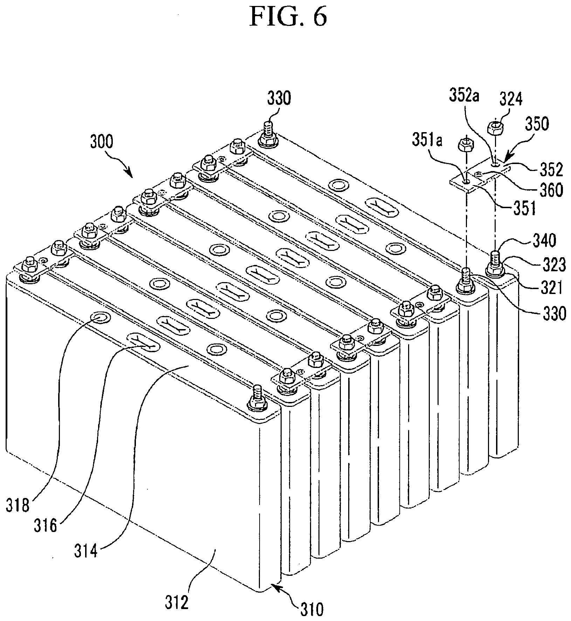

FIG. 6 is a perspective view showing a battery module according to the second exemplary embodiment of the present invention.

Referring to FIG. 6, a battery module 300 according to the present exemplary embodiment includes a plurality of rechargeable batteries 310 having a positive electrode terminal 330 and a negative electrode terminal 340, and connecting members 350 that electrically connect the rechargeable batteries 310.

The battery module 300 according to the present exemplary embodiment is formed by connecting the rechargeable batteries 310 in series.

The rechargeable battery 310 according to the present exemplary embodiment is formed in a prismatic shape and includes a case 312, a cap plate 314 connected to an opening of the case 312, and the positive electrode terminal 330 and the negative electrode terminal 340 that protrude outside the case 312. A vent member 316 that is opened when the internal pressure increases and a sealing cap 318 that seals an electrolyte injection inlet are disposed on the cap plate 314.

Further, the terminals 330 and 340 are disposed on the cap plate 314 to protrude outside the cap plate 314, and lower nuts 323 supporting the terminals 330 and 340 on the cap plate 314 are fitted on the terminals 330 and 340. Further, a gasket 321 for insulation is disposed between each lower nut 323 and the cap plate 314.

The positive electrode terminal 330 and the negative electrode terminal 340 are formed substantially in a cylindrical shape, and the outer circumferential surfaces are threaded to fit nuts. Further, the positive electrode terminal 330 and the negative electrode terminal 340 are electrically connected with an electrode assembly inserted in the case 312. The positive electrode terminal 330 is made of aluminium and the negative electrode terminal 340 is made of copper.

The connecting member 350 is disposed on the lower nut 323 and includes a first connecting bar 351 contacting the positive electrode terminal 330 and a second connecting bar 352 contacting the negative electrode terminal 340. The first connecting bar 351 is made of the same material as the positive electrode terminal 330, and a terminal hole 351a in which the positive electrode terminal 330 is inserted is formed through the first connecting bar 351. The second connecting bar 352 is made of the same material as the negative electrode terminal 340, and a terminal hole 352a in which the negative electrode terminal 340 is inserted is formed through the second connecting bar 352.

The connecting member 350 is fixed to the terminals 330 and 340 by inserting the positive electrode terminal 330 and the negative electrode terminal 340 in the terminal holes 351a and 352a, respectively, and then fitting upper nuts 324 on the terminals 330 and 340.

The connecting member 350 is formed in the same structure as the connecting member according to the first exemplary embodiment. Welding protrusions are formed at the first connecting bar 351 and the second connecting bar 352, and a welding portion 360 is formed at the connecting portion by overlapping and then bonding the welding protrusions, using friction stir welding.

According to the present exemplary embodiment, since in the connecting member 350, the portion contacting the positive electrode terminal 330 is made of the same material as the positive electrode terminal 330 and the portion contacting the negative electrode terminal 340 is made of the same material as the negative electrode terminal 340, it is possible to prevent corrosion between the connecting member 350 and the terminals 330 and 340. Further, since the first connecting bar 351 and the second connecting bar 352 are bonded by friction stir welding, it is possible to stably fix different metals.

## Claims

1. A battery module (100) comprising:
a plurality of rechargeable batteries (110) formed in a prismatic shape each having a case (112) and a cap plate (114) connected to an opening of the case (112), and
a connecting member (160) to electrically connect a first positive electrode terminal (130) of a first rechargeable battery (110) with a negative second electrode terminal (140) of a second rechargeable battery (110), wherein the first electrode terminal (130) is made of aluminum and the second electrode terminal (140) is made of copper and the first and second electrode terminals (130, 140) protrude outside the case (112),
wherein
the connecting member (160) has the form of a plate covering the first electrode terminal (130) and the second electrode terminal (140) and comprises:
a first connecting bar (161) connected to the first electrode terminal (130) of the first rechargeable battery (110) and comprising the same material as the first electrode terminal (130),
a second connecting bar (162) connected to the second electrode terminal (140) of the second rechargeable battery (110) and comprising the same material as the second electrode terminal (140), wherein the second connecting bar (162) comprises a different material than the first connecting bar (161), and
a welding portion (150) connecting the first connecting bar (161) with the second connecting bar (162),
**characterized in that**
the first connecting bar (161, 211) has a stepped profile and comprises a first welding portion (161a, 212a) formed to contact the second connecting bar (162, 212) by friction stir welding, and a body portion,
wherein the upper surface of the first connecting bar (161) is stepped and the first welding portion (161a) has a smaller thickness than the body portion, the lower surfaces of the body portion and the welding portion being aligned with each other, and
wherein the second connecting bar (162) has a stepped profile and comprises a body portion and a second welding portion (162a) formed to contact the first welding portion (161a), the second connecting bar (162) being arranged such that the upper and lower surfaces of the first and second connecting bar (161, 162) are aligned with each other.

2. Battery module (100) of claim 1, wherein the welding portion (150) comprises a nugget zone (152) comprising a mixture of the materials of the first and second connecting bars (161, 162).

3. Battery module (100) of claim 2, wherein the nugget zone is formed within the first and second connecting bar (161, 162).

4. Battery module (100) of one of the previous claims, wherein the first and second connecting bars (161, 162) each comprise a terminal welding portion (165) at which the first or second connecting bar (161, 162) is welded to the first or second electrode terminal (130, 140), respectively.

6. Battery module (100) of any of the previous claims, wherein the welding portion (150): comprises a welding groove (151) formed in the surface of the connecting member (160), and/or has a cone or truncated cone like shape.

7. Battery module (100) of one of the previous claims, wherein the welding portion (150) further comprises at least one of:
a thermo-mechanically affected zone (154) around the nugget zone (152), in which deformation of the material of the first and second connecting bar (161, 162) is distributed at an angle with respect to the surface of the connecting bar (160); and
a heat affected zone (156) around the thermo-mechanically affected zone (154).

## Patentansprüche

1. Batteriemodul (100), umfassend:
eine Mehrzahl wiederaufladbarer Batterien (110), die in einer prismatischen Form ausgebildet sind und jeweils ein Gehäuse (112) und eine mit einer Öffnung des Gehäuses (112) verbundene Abdeckplatte (114) aufweisen, und
ein Verbindungselement (160) zum elektrischen Verbinden eines ersten positiven Elektrodenanschlusses (130) einer ersten wiederaufladbaren Batterie (110) mit einem negativen zweiten Elektrodenanschluss (140) einer zweiten wiederaufladbaren Batterie (110), wobei der erste Elektrodenanschluss (130) aus Aluminium gefertigt ist und der zweite Elektrodenanschluss (140) aus Kupfer gefertigt ist, und die ersten und zweiten Elektrodenanschluss (130, 140) außerhalb des Gehäuses (112) hervorragen,
wobei
das Verbindungselement (160) die Form einer Platte aufweist, die den ersten Elektrodenanschluss (130) und den zweiten Elektrodenanschluss (140) bedeckt und Folgendes umfasst:
eine erste Anschlussschiene (161), die mit dem ersten Elektrodenanschluss (130) der ersten wiederaufladbaren Batterie (110) verbunden ist und dasselbe Material umfasst wie der erste Elektrodenanschluss (130),
eine zweite Anschlussschiene (162), die mit dem zweiten Elektrodenanschluss (140) der ersten wiederaufladbaren Batterie (110) verbunden ist und dasselbe Material umfasst wie der zweite Elektrodenanschluss (140), wobei die zweite Anschlussschiene (162) ein anderes Material umfasst als die erste Anschlussschiene (161), und
einen Schweißabschnitt (150), der die erste Anschlussschiene (161) mit der zweiten Anschlussschiene (162) verbindet,
**dadurch gekennzeichnet, dass**
die erste Anschlussschiene (161, 211) ein Stufenprofil aufweist und einen ersten Schweißabschnitt (161a, 212a), der dazu ausgebildet ist, die zweite Anschlussschiene (162, 212) durch Reibrührschweißen zu berühren, und einen Hauptkörperabschnitt umfasst,
wobei die obere Oberfläche der ersten Anschlussschiene (161) gestuft ist und der erste Schweißabschnitt (161a) eine geringere Dicke aufweist als der Hauptkörperabschnitt, wobei die unteren Oberflächen des Hauptkörperabschnitts und der Schweißabschnitt miteinander ausgerichtet sind, und
wobei die zweite Anschlussschiene (162) ein gestepptes Profil aufweist und einen Hauptkörperabschnitt und einen zweiten Schweißabschnitt (162a), der dazu ausgebildet ist, den ersten Schweißabschnitt (161a) zu berühren, umfasst, wobei die zweite Anschlussschiene (162) so angeordnet ist, dass die oberen und unteren Oberflächen der ersten und zweiten Anschlussschienen (161, 162) miteinander ausgerichtet sind.

2. Batteriemodul (100) nach Anspruch 1, wobei der Schweißabschnitt (150) einen Schweißpunktbereich (152) umfasst, der eine Mischung der Materialien der ersten und zweiten Anschlussschienen (161, 162) umfasst.

3. Batteriemodul (100) nach Anspruch 2, wobei der Schweißpunktbereich innerhalb der ersten und zweiten Anschlussschienen (161, 162) gebildet ist.

4. Batteriemodul (100) nach einem der vorangehenden Ansprüche, wobei die ersten und zweiten Anschlussschienen (161, 162) jeweils einen Anschlussschweißabschnitt (165) umfassen, an dem die ersten und zweiten Anschlussschienen (161, 162) jeweils an die ersten oder zweiten Elektrodenanschlüsse (130, 140) geschweißt sind.

6. Batteriemodul (100) nach einem der vorangehenden Ansprüche, wobei der Schweißabschnitt (150) eine Schweißfuge (151) umfasst, die in der Oberfläche des Verbindungselements (160) gebildet ist und/oder eine Kegelform oder eine Kegelstumpfform aufweist.

7. Batteriemodul (100) nach einem der vorangehenden Ansprüche, wobei der Schweißabschnitt (150) ferner mindestens eines aus Folgendem umfasst:
einen thermomechanisch beeinflussten Bereich (154) um den Schweißpunktbereich (152), in dem die Verformung der Materialien der ersten und zweiten Anschlussschienen (161, 162) in einem Winkel bezogen auf die Oberfläche der Anschlussschiene (160) verteilt ist, und
ein wärmebeeinflusster Bereich (156) um den thermomechanisch beeinflussten Bereich (154) herum.

## Revendications

1. Module de batterie (100), comprenant :
une pluralité de batteries rechargeables (110) formées sous une forme prismatique, comportant chacune un boîtier (112) et une plaque de protection (114) reliée à une ouverture du boîtier (112), et
un élément de connexion (160) pour connecter électriquement une première borne d'électrode positive (130) d'une première batterie rechargeable (110) à une deuxième borne d'électrode négative (140) d'une deuxième batterie rechargeable (110), la première borne d'électrode (130) étant réalisée en aluminium et la deuxième borne d'électrode (140) étant réalisée en cuivre, et les première et deuxième bornes d'électrode (130, 140) faisant saillie à l'extérieur du boîtier (112),
dans lequel :
l'élément de connexion (160) a la forme d'une plaque recouvrant la première borne d'électrode (130) et la deuxième borne d'électrode (140), et comprend :
une première barre de connexion (161) connectée à la première borne d'électrode (130) de la première batterie rechargeable (110) et comprenant le même matériau que la première borne d'électrode (130),
une deuxième barre de connexion (162) connectée à la deuxième borne d'électrode (140) de la deuxième batterie rechargeable (110) et comprenant le même matériau que la deuxième borne d'électrode (140), la deuxième barre de connexion (162) comprenant un matériau différent de celui de la première barre de connexion (161), et
une partie de soudage (150) connectant la première barre de connexion (161) à la deuxième barre de connexion (162),
**caractérisé en ce que** :
la première barre de connexion (161, 221) a un profil étagé et comprend une première partie de soudage (161a, 212a) formée de façon à venir en contact avec la deuxième barre de connexion (162, 212) par soudage par friction malaxage, et une partie de corps,
dans lequel la surface supérieure de la première barre de connexion (161) est étagée et la première partie de soudage (161a) a une épaisseur inférieure à celle de la partie de corps, les surfaces inférieures de la partie de corps et de la partie de soudage étant alignées l'une avec l'autre, et
dans lequel la deuxième barre de connexion (162) a un profil étagé et comprend une partie de corps et une deuxième partie de soudage (162a) formée de façon à venir en contact avec la première partie de soudage (161a), la deuxième barre de connexion (162) étant agencée de telle sorte que les surfaces supérieures et inférieures des première et deuxième barres de connexion (161, 162) soient alignées les unes avec les autres.

2. Module de batterie (100) selon la revendication 1, dans lequel la partie de soudage (150) comprend une zone de noyau (152) comprenant un mélange des matériaux des première et deuxième barres de connexion (161, 162).

3. Module de batterie (100) selon la revendication 2, dans lequel la zone de noyau est formée à l'intérieur des première et deuxième barres de connexion (161, 162).

4. Module de batterie (100) selon l'une des revendications précédentes, dans lequel les première et deuxième barres de connexion (161, 162) comprennent chacune une partie de soudage de borne (165) au niveau de laquelle la première ou la deuxième barre de connexion (161, 162) est soudée à la première ou à la deuxième borne d'électrode (130, 140), respectivement.

6. Module de batterie (100) selon l'une quelconque des revendications précédentes, dans lequel la partie de soudage (150) : comprend une rainure de soudage (151) formée dans la surface de l'élément de connexion (160) et/ou a une forme conique ou tronconique.

7. Module de batterie (100) selon l'une des revendications précédentes, dans lequel la partie de soudage (150) comprend en outre au moins l'une parmi :
une zone affectée de façon thermomécanique (154) autour de la zone de noyau (152), dans laquelle une déformation du matériau des première et deuxième barres de connexion (161, 162) est répartie selon un certain angle par rapport à la surface de la barre de connexion (160) ; et
une zone affectée par la chaleur (156) autour de la zone affectée de façon thermomécanique (154).
